(19) Europäisches Patentamt
European Patent Office
Office européen des brevets

(11) **EP 1 759 103 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(21) Anmeldenummer: **05752828.3**

(22) Anmeldetag: **13.06.2005**

(51) Int Cl.:
**F02C 7/143** *(2006.01)*

(86) Internationale Anmeldenummer:
**PCT/EP2005/052709**

(87) Internationale Veröffentlichungsnummer:
**WO 2005/124125 (29.12.2005 Gazette 2005/52)**

(54) **VERFAHREN ZUM BETRIEB EINES VERDICHTERS EINER GASTURBINE BEI VERDUNSTUNGSKÜHLUNG DER VERDICHTERANSAUGLUFT**

METHOD FOR OPERATING A GAS TURBINE COMPRESSOR WHILE COOLING THE COMPRESSOR INTAKE AIR BY EVAPORATION

PROCEDE POUR FAIRE FONCTIONNER UN COMPRESSEUR D'UNE TURBINE A GAZ EN REFROIDISSANT PAR EVAPORATION L'AIR D'ASPIRATION DU COMPRESSEUR

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.06.2004 CH 10452004**

(43) Veröffentlichungstag der Anmeldung:
**07.03.2007 Patentblatt 2007/10**

(73) Patentinhaber: **Alstom Technology Ltd 5400 Baden (CH)**

(72) Erfinder:
- **CATALDI, Giovanni CH-8037 Zürich (CH)**
- **FAEHNDRICH, Christian CH-8906 Bonstetten (CH)**
- **MATZ, Charles, Raymond CH-5432 Neuenhof (CH)**

(56) Entgegenhaltungen:
**EP-A- 0 889 212       EP-A- 1 203 866
EP-A- 1 231 369       WO-A-03/058047
DE-A- 19 913 681      US-A- 5 463 873**

## Beschreibung

### Technisches Anwendungsgebiet

Die vorliegende Erfindung betrifft ein Verfahren zum Betrieb eines Verdichters einer Gasturbine, bei dem aus der Umgebung angesaugte Verdichterluft vor dem Eintritt in den Verdichter mittels Verdunstungskühlung abgekühlt wird.

Beim Betrieb von Gasturbinen wird aus der Umgebung angesaugte Luft in einem Verdichter komprimiert und dem Gasturbinenprozess zugeführt. Zur Steigerung des Wirkungsgrades der Gasturbine ist es bekannt, die angesaugte Verdichterluft vor dem Eintritt in den Verdichter zusätzlich zu kühlen. Diese Kühlung erfolgt in vielen Fällen durch Eindüsen von feinsten Wassertröpfchen oder Wasserdampf in den vom Verdichter angesaugten Luftstrom, der durch die Verdunstung des Wassers abgekühlt wird.

Der Einsatz der Verdunstungskühlung kann jedoch zu Temperaturschwankungen im angesaugten Luftstrom führen, durch die der Verdichter der Gefahr des Verdichterpumpens ausgesetzt wird. Dieses Verdichterpumpen kann in schwerwiegenden Fällen zur Zerstörung von Anlagenkomponenten führen und muss daher in jedem Falle vermieden werden.

### Stand der Technik

Bei bekannten Gasturbinen, die mit durch Verdunstungskühlung gekühlter Verdichteransaugluft arbeiten, ist es bekannt, die Temperatur in der Verdichteransaugluft während des Betriebes ständig an unterschiedlichen Stellen zu messen. Auf diese Weise werden Temperaturschwankungen erkannt und der Verdichter kann bei einer zu hohen Schwankungsamplitude kurzfristig abgeschaltet werden, um mögliche Schäden zu vermeiden. Für jeden Verdichter werden hierfür entsprechende Kennfelder bereitgestellt, die die für den Verdichter spezifischen Grenzen der Temperaturschwankungen angeben, oberhalb der ein Pumpen des Verdichters auftreten kann.

Die Temperaturüberwachung erfordert den Einsatz mehrerer abgeschirmter Temperatursensoren im Luftansaugstutzen sowie eine zugehörige Hard- und Software für die Verarbeitung der Messsignale. Allerdings besteht bei diesen abgeschirmten Temperatursensoren das Problem, dass sie im Betrieb häufig nass werden und dadurch häufig Fehlmessungen mit angeblich zu hohen Temperaturschwankungen liefern. EP 0 889 212 offenbart ein Verfahren zum Betrieb eines Verdichters gemäß des Oberbegriffs des Anspruchs 1.

Die Aufgabe der vorliegenden Erfindung besteht darin, ein Verfahren zum Betrieb eines Verdichters einer Gasturbine mit mittels Verdunstungskühlung gekühlter Verdichteransaugluft anzugeben, das die Wahrscheinlichkeit für Fehlwarnungen bei sicherem Betrieb des Verdichters vermindert und sich kostengünstig umsetzen lässt.

### Darstellung der Erfindung

Die Aufgabe wird mit dem Verfahren gemäß Patentanspruch 1 gelöst. Vorteilhafte Ausgestaltungen des Verfahrens sind Gegenstand der Unteransprüche oder lassen sich der nachfolgenden Beschreibung sowie dem Ausführungsbeispiel entnehmen.

Beim vorliegenden Verfahren zum Betrieb eines Verdichters einer Gasturbine, bei dem aus der Umgebung angesaugte Verdichterluft vor dem Eintritt in den Verdichter mittels Verdunstungskühlung abgekühlt wird, werden vor der Inbetriebnahme des Verdichters durch Verdunstungskühlung maximal mögliche Temperaturabsenkungen in Abhängigkeit von unterschiedlichen Umgebungsbedingungen bestimmt und/oder als Datensatz bereitgestellt. Diese Temperaturabsenkungen werden mit einem Kennfeld des Verdichters in Beziehung gesetzt, dem zur Vermeidung des Pumpens einzuhaltende maximale Temperaturschwankungen bei unterschiedlichen Umgebungsbedingungen und unterschiedlicher Drehzahl des Verdichters entnehmbar sind. Die Verdunstungskühlung wird beim vorliegenden Verfahren nur dann betrieben, wenn die momentanen Umgebungsbedingungen eine maximal mögliche Temperaturabsenkung ergeben, von der ein vorgegebener Bruchteil, der zwischen 50% und 100% liegt, die für diese Umgebungsbedingungen und die momentane Drehzahl des Verdichters dem Kennfeld entnehmbare maximale Temperaturschwankung nicht übertrifft.

Das vorliegende Verfahren kommt somit vollständig ohne abgeschirmte Temperatursensoren aus, so dass keine dadurch bedingten Fehlwarnungen mehr auftreten. Das Verfahren kommt damit auch ohne die erforderliche Hard- und Software für diese Temperatursensorik aus, so dass es sich kostengünstiger realisieren lässt. Ein Schutz des Verdichters wird durch die Verfahrensschritte des vorliegenden Verfahrens dennoch zuverlässig erreicht, indem die Verdunstungskühlung nicht bei Umgebungsbedingungen betrieben wird, bei denen die Temperatur und die relative Feuchte der Umgebung bestimmte Grenzwertkombinationen beider Größen über- bzw. unterschreitet. Dieser eingeschränkte Betriebsbereich ergibt sich aus der Bestimmung der im ungünstigsten Fall auftretenden Temperaturschwankungen aus der durch die Verdunstungskühlung maximal möglichen Temperaturabsenkung (bzw. einem Bruchteil hiervon) bei unterschiedlichen Umgebungsbedingungen. Diese Temperaturschwankungen werden mit dem zugehörigen Kennfeld des Verdichters verglichen, aus dem die maximal zur Vermeidung des Pumpens tolerierbaren Temperaturschwankungen der angesaugten Verdichterluft bei den entsprechenden Umgebungsbedingungen und unterschiedlicher Drehzahl des Verdichters zu entnehmen sind. Liegt die mit der Verdunstungskühlung bei den momentanen Umgebungs- und Drehzahlwerten erreichbare Schwankungsamplitude unterhalb der Pumpgrenze des Verdichters, so kann der Verdichter mit der Verdunstungskühlung gefahrlos betrieben werden. Liegt die Amplitude außerhalb dieses Bereiches, so wird die Verdunstungskühlung nicht betrieben bzw. abgeschaltet. Durch diese Vorgehensweise wird somit die Betriebslinie des Verdichters abhängig von Umgebungsbedingungen und Drehzahl eingeschränkt.

Die Bestimmung der maximal durch die Verdunstungskühlung möglichen Temperaturabsenkung in Abhängigkeit von unterschiedlichen Umgebungsbedingungen, d. h. unterschiedlichen Umgebungstemperaturen und unterschiedlicher relativer Feuchte, kann auf rechnerischem Wege oder durch Vorabmessung erfolgen. Es können auch bereits vorliegende Tabellen oder Diagramme herangezogen werden. Bei dem vorliegenden Verfahren wird auch ausgenutzt, dass die maximal durch Verdunstungskühlung erreichbare Temperaturabsenkung in der Regel größer als die dadurch in der angesaugten Verdichterluft hervorgerufenen Temperaturschwankungen ist. Der Zusammenhang zwischen beiden Größen, d. h. der Bruchteil der Temperaturabsenkung, der der resultierenden Temperaturschwankung entspricht, kann empirisch bestimmt werden. Vorzugsweise wird beim vorliegenden Verfahren ein Wert im Bereich von ca. 80% der maximal möglichen Temperaturabsenkung als resultierende Temperaturschwankung angesetzt.

In einer Ausgestaltung des vorliegenden Verfahrens werden die Umgebungsbedingungen, d.h. die Temperatur und relative Feuchte der Umgebung, während des Betriebs der Gasturbine ständig erfasst, um bei Änderungen, die eine Gefahr des Pumpens des Verdichters hervorrufen können, die Verdunstungskühlung abzuschalten.

Vorzugsweise wird eine derartige Abschaltung der Verdunstungskühlung auch vorgenommen, wenn der Druck des für die Verdunstungskühlung zugeführten Mediums, insbesondere Wasser, bestimmte vorgebbare Grenzwerte über- oder unterschreitet. Vorzugsweise wird die Abschaltung dann vorgenommen, wenn der Druck in der Zuleitung unter $120*10^5$ Pa (120 bar) abfällt oder über $180*10^5$ Pa (180 bar) ansteigt. In einer weiteren Ausgestaltung erfolgt diese Abschaltung auch, wenn der Massenfluss des zur Verdunstung zugeführten Mediums mehr als 5% von einem vorgegebenen Soll-Massenfluss abweicht.

Weiterhin wird beim vorliegenden Verfahren die Eindüsung des Verdunstungsmediums in den angesaugten Verdichterluftstrom so vorgenommen, dass eine symmetrische Verteilung innerhalb des Querschnitts des Luftansaugstutzens und/oder eine hinsichtlich der lokalen Strömungsgeschwindigkeit der angesaugten Luft gewichtete Eindüsung für eine maximale Homogenität des gesättigten Luftstroms erreicht werden. Die Einspritzdüsen sind in letztgenanntem Fall in Querschnittsbereichen hoher Strömungsgeschwindigkeit im Luftansaugstutzen dichter angeordnet als in anderen Bereichen, so dass die Kontinuitätsgleichung

$$\dot{m} = \rho \times \vec{V} \times A$$

erfüllt wird.

## Kurze Beschreibung der Zeichnungen

Das vorliegende Verfahren wird nachfolgend anhand eines Ausführungsbeispiels in Verbindung mit den Zeichnungen nochmals näher erläutert. Hierbei zeigen:

Fig. 1    ein Beispiel für ein Kennfeld eines Verdichters mit Angabe der Pumpgrenze, der ungestörten Betriebslinie und der durch Temperaturabweichungen verschobenen Betriebslinie;

Fig. 2    ein Beispiel für ein Kennfeld einer Gasturbine, das die maximalen Temperaturschwankungen angibt, die zur Vermeidung des Pumpens bei unterschiedlicher Drehzahl des Verdichters auftreten dürfen;

Fig. 3    ein Beispiel für die Beschränkung des Betriebsbereiches der Verdunstungskühlung gemäß dem vorliegenden Verfahren;

Fig. 4    ein Beispiel für einen empirisch ermittelten Zusammenhang zwischen der maximal durch die Verdunstungskühlung erreichbaren Temperaturabsenkung und der daraus resultierenden Temperaturschwankung;

Fig. 5    ein zweites Beispiel für die Beschränkung des Betriebsbereiches der Verdunstungskühlung gemäß dem vorliegenden Verfahren; und

Fig. 6    ein Beispiel für die Vorgehensweise zur Überwachung der Verdunstungskühlung.

## Wege zur Ausführung der Erfindung

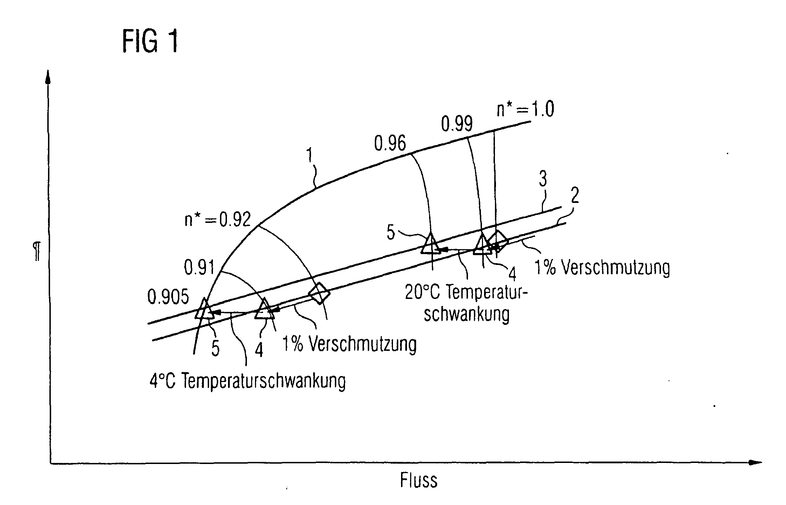

Figur 1 zeigt beispielhaft ein Kennfeld eines Verdichters einer Gasturbine, in dem die Pumpgrenze 1, die ungestörte Betriebslinie 2 sowie die durch Temperaturschwankungen verschobene Betriebslinie 3 eingezeichnet sind. Weiterhin sind die Linien konstanter Drehzahl des Verdichters bei unterschiedlichen Drehzahlen n* (als Bruchteil der Nenndrehzahl) zuerkennen. Dem Fachmann ist eine derartige Darstellungsweise geläufig. Im rechten Teil der Figur ist hierbei ausgehend von einem Betriebspunkt 4 ein Betriebsverhalten dargestellt, bei dem der Betriebspunkt durch 1% Verschmutzung auf der Betriebslinie 2 zunächst zu einem etwas verringerten Fluss und anschließend durch Temperaturschwankungen mit einer Schwankungsamplitude von 20°C auf einen Betriebspunkt 5 auf der verschobenen Betriebslinie 3 verschoben wird. Aus dem Kennfeld ist deutlich zu erkennen, dass in diesem Betriebsbereich keine Gefahr des Pumpens besteht, da noch ein ausreichender Abstand zur Pumpgrenze 1 besteht.

In einem im linken Teil der Figur 1 erkennbaren Bereich geringeren Flusses führt hingegen bereits eine Schwankungsamplitude der Temperatur von 4°C zu einem Betriebspunkt 5 auf der verschobenen Betriebslinie 3, der auf der Pumpgrenze 1 liegt. Ein derartiger Betriebsbereich muss zur Vermeidung von Schäden unbedingt verhindert werden.

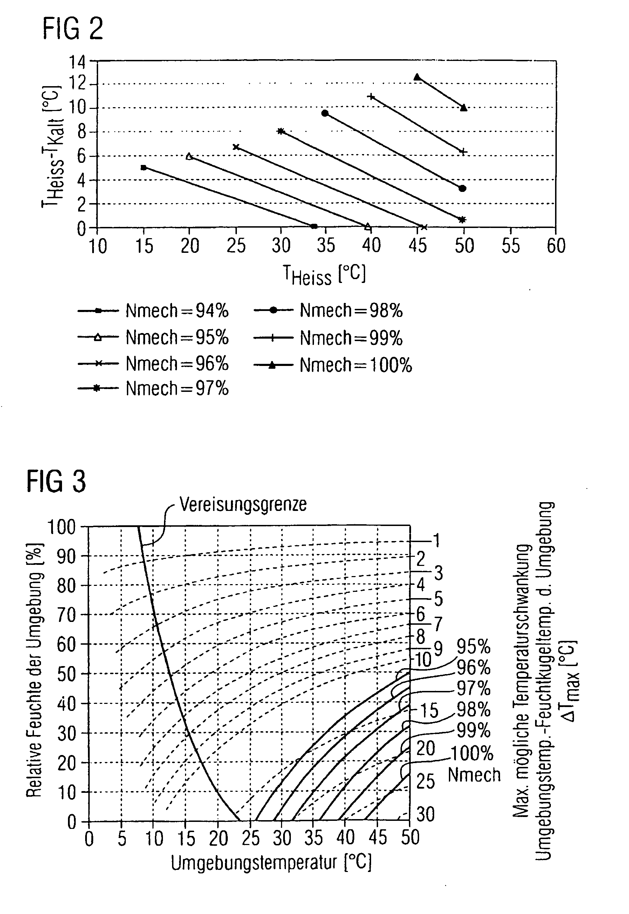

Die Figur 2 zeigt ein typisches Kennfeld eines Verdichters, in dem die zur Vermeidung des Pumpens maximal tolerierbaren Temperaturschwankungen in Abhängigkeit von unterschiedlichen Drehzahlen des Verdichters (in Prozent der Nenndrehzahl), wie sie durch Netzschwankungen verursacht werden können, eingetragen sind. Die maximal tolerierbaren Temperaturschwankungen sind neben der Drehzahl auch abhängig von der Umgebungstemperatur, d. h. der Temperatur ohne Verdunstungskühlung. Bei bekannten Gasturbinen werden durch die Anordnung von Temperatursensoren im Luftansaugstutzen die Temperaturen an verschiedenen Stellen ständig überwacht, um eine Überschreitung der in einem derartigen Kennfeld eingetragenen maximal tolerierbaren Temperaturschwankungen rechtzeitig zu detektieren.

Gemäß dem vorliegenden Verfahren wurde erkannt, dass eine derartige Überwachung nicht mehr erforderlich ist, wenn die maximal möglichen Temperaturschwankungen, die durch die eingesetzte Verdunstungskühlung bei vorgegebenen Umgebungsbedingungen erreichbar sind, geringer als die maximal tolerierbaren Temperaturschwankungen bei diesen Umgebungsbedingungen sind. Die maximal mögliche Temperaturschwankung entspricht der Differenz zwischen der Umgebungstemperatur und der Feuchtkugeltemperatur bei einer vorgegebenen relativen Luftfeuchte.

Dieser berechenbare Zusammenhang kann der Figur 3 entnommen werden. In dieser Figur ist der Temperaturunterschied zwischen der Umgebungstemperatur und der Feuchtkugeltemperatur durch die Schar gestrichelter Linien bei unterschiedlicher Umgebungstemperatur und unterschiedlicher relativer Feuchte eingetragen. Die durchgezogene Linie im linken Teil der Figur gibt die Vereisungsgrenze an, ab der eine Eisbildung durch den in die angesaugte Luft eingebrachten Wasserdampf bzw. die eingebrachten Wassertröpfchen auftritt. Ein derartiger Betriebsbereich links dieser Vereisungslinie darf beim Betrieb des Verdichters nicht erreicht werden, da sonst Vereisung auftritt.

In der gleichen Darstellung sind in der rechten unteren Ecke Grenzlinien für unterschiedliche Drehzahlen des Verdichters von 95% bis 100% (bezogen auf die Nenndrehzahl) eingetragen. Diese Grenzlinien geben für den Verdichter, auf den sie sich beziehen, die Bereiche an, innerhalb derer die Gefahr des Pumpens auftritt. Im vorliegenden Beispiel bedeutet dies, dass bspw. bei einer Drehzahl von 95% der Nenndrehzahl Bereiche, die auf der rechten Seite der entsprechenden Grenzlinie liegen, bei zugeschalteter Verdunstungskühlung nicht erreicht werden dürfen. Liegen daher die Umgebungsbedingungen, d. h. die Umgebungstemperatur und die relative Feuchte innerhalb dieses Bereiches, so wird keine Verdunstungskühlung betrieben. Auf der anderen Seite besteht im Bereich links dieser Grenzlinie keinerlei Gefahr des Pumpens durch Temperaturschwankungen, die durch die Verdunstungskühlung hervorgerufen werden. Bei diesen Umgebungsbedingungen kann der Verdichter daher mit der Verdunstungskühlung gefahrlos ohne weitere Temperatur-Kontrollmechanismen betrieben werden.

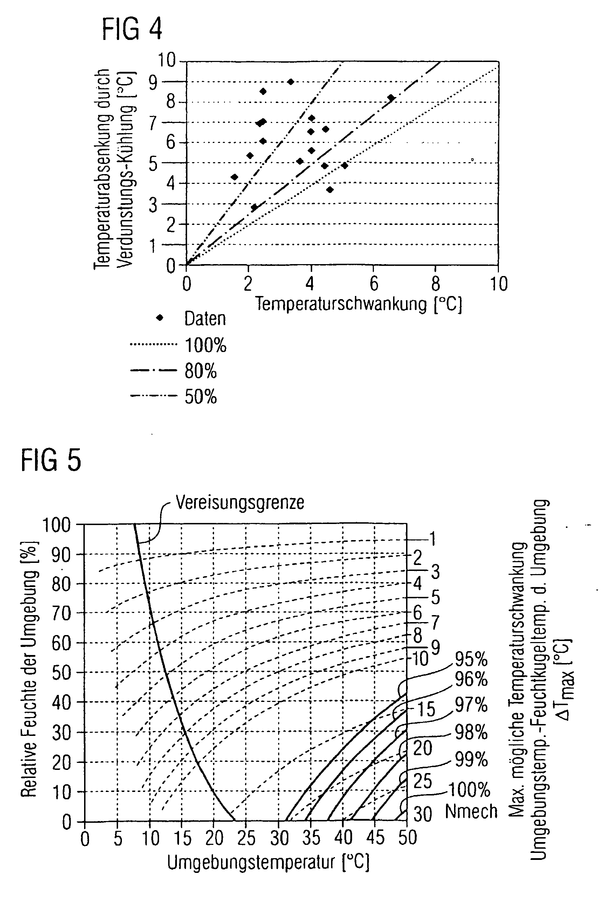

Bei der Einschränkung des Betriebsbereiches gemäß Figur 3, innerhalb dessen die Verdunstungskühlung bei dem Verdichter betrieben werden kann, wurde angenommen, dass die durch die Verdunstungskühlung erreichbare Temperaturabsenkung zu Temperaturschwankungen führt, die der gleichen Temperaturdifferenz entsprechen. Dies ist jedoch in der Regel nicht der Fall, wie anhand der Figur 4 zu erkennen ist. Der Zusammenhang zwischen der mit der Verdunstungskühlung erreichbaren Temperaturabsenkung und den daraus resultierenden Temperaturschwankungen kann durch Messungen erfasst werden. Aus der Messung der Figur 4 lässt sich erkennen, dass die sich aus der Verdunstungskühlung ergebende Amplitude der Temperaturschwankung in der Regel geringer als die Amplitude der durch diese Verdunstungskühlung erreichbaren Temperaturabsenkung ist. In der Figur sind neben den gemessenen Daten die Kurven eingezeichnet, die sich bei Annahme einer resultierenden Temperaturschwankung ergeben, die 50%, 80% oder 100% der Amplitude der durch die Verdunstungskühlung erreichbaren Temperaturabsenkung entspricht. Aus der Figur ist deutlich zu erkennen, dass die Kurven bei 80% und 50% der Realität näher liegen als die Kurve bei 100%.

Für die Betriebsweise eines Verdichters gemäß dem vorliegenden Verfahren wird daher vorzugsweise ein Zusammenhang vorgegeben, bei dem die aus der Verdunstungskühlung resultierende Temperaturschwankung 80% der durch die Verdunstungskühlung maximal möglichen Temperaturabsenkung entspricht. Dies ist in der Figur 5 dargestellt, in der die gleichen Daten wie bei der bereits beschriebenen Figur 3 eingetragen sind. In diesem Fall ist jedoch die Beschränkung des Betriebsbereiches der Verdunstungskühlung geringer, so dass sich im rechten unteren Teil der Figur ein kleinerer verbotener Bereich ergibt, innerhalb dessen die Verdunstungskühlung nicht betrieben werden darf.

Bei der Implementierung des vorliegenden Verfahrens in eine Gasturbine sollte das Einspritzsystem der Verdunstungskühlung vor dem Verdichtereintritt geeignet ausgelegt sein. Hierfür sollten die einzelnen Düsen oder Düsenstufen symmetrisch innerhalb des Querschnitts des Luftansaugstutzens angeordnet sein. Zum anderen ist es von Vorteil, wenn die Düsen in Bereichen höherer Strömungsgeschwindigkeit der angesaugten Luft dichter beieinander liegen als in Bereichen niedrigerer Strömungsgeschwindigkeit, so dass sich eine maximale Gleichförmigkeit des gesättigten Flusses im Luftansaugstrom ergibt. In einem Luftansaugstutzen einer Gasturbine treten die höheren Strömungsgeschwindigkeiten der angesaugten Luft vor allem im zentralen Bereich auf, so dass in diesem Bereich eine entsprechend dichtere Anordnung der Einspritzdüsen vorliegen sollte als in den anderen Bereichen. Grundsätzlich sollte die Packungsdichte der Düsen die Einhaltung der Kontinuitätsgleichung

$$\dot{m} = \rho \; x \; \vec{V} \; x \; A$$

ermöglichen.

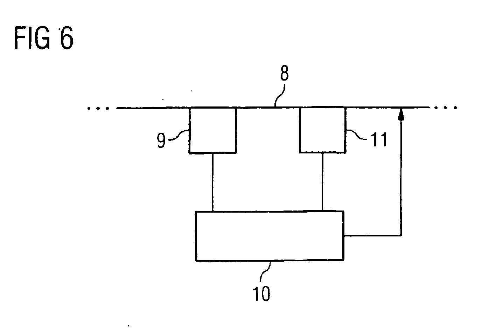

Figur 6 zeigt schließlich schematisch eine weitere Ausgestaltung, bei der der Druck in der Zuführungsleitung 8 der Verdunstungskühlung über eine Druckmesseinrichtung 9 überwacht wird, um bei über- oder unterschreiten eines Grenzwertes dieses Druckes, der vorzugsweise zwischen 120*10$^5$ Pa (120 bar) und 180*10$^5$ Pa (180 bar) liegt, die Zuführung über eine Steuereinheit 10 abschalten zu können. Weiterhin wird bei der dargestellten Ausgestaltung der Massenfluss in der Zuführungsleitung 8 während des Betriebes mit einer Messeinrichtung 11 gemessen, und bei Abweichung von mehr als 5% von einem Sollwert die Verdunstungskühlung ebenfalls abzuschalten.

Bezugszeichenliste

1    Pumpgrenze

2    Betriebslinie

3    verschobene Betriebslinie

4    Betriebspunkt auf der ungestörten Betriebslinie

5    Betriebspunkt auf der verschobenen Betriebslinie

8    Zuführungsleitung

9    Druckmesseinrichtung

10   Steuereinheit

11   Messeinrichtung für Massenfluss

**Patentansprüche**

1.   Verfahren zum Betrieb eines Verdichters einer Gasturbine, bei dem aus der Umgebung angesaugte Verdichterluft vor dem Eintritt in den Verdichter mittels Verdunstungskühlung abgekühlt wird,
wobei
vor der Inbetriebnahme des Verdichters durch Verdunstungskühlung maximal mögliche Temperaturabsenkungen in Abhängigkeit von unterschiedlichen Umgebungsbedingungen bestimmt und/oder als Datensatz bereitgestellt werden, die Temperaturabsenkungen mit einem Kennfeld des Verdichters in Beziehung gesetzt werden und dem zur Vermeidung eines Pumpens einzuhaltende maximale Temperaturschwankungen bei unterschiedlichen Umgebungsbedingungen und unterschiedlicher Drehzahl des Verdichters entnehmbar sind, **dadurch gekennzeichnet, dass** die Verdunstungskühlung nur dann betrieben wird, wenn momentane Umgebungsbedingungen eine maximal mögliche Temperaturabsenkung ergeben, von der ein vorgegebener Bruchteil, der zwischen 50% und 100% liegt, die für diese Umgebungsbedingungen und eine momentane Drehzahl des Verdichters dem Kennfeld entnehmbare maximale Temperaturschwankung nicht übertrifft.

2.   Verfahren nach Anspruch 1,
**dadurch gekennzeichnet,**
**dass** die Verdunstungskühlung nur betrieben wird, wenn die momentanen Umgebungsbedingungen eine maximal mögliche Temperaturabsenkung ergeben, von der ein Bruchteil von 80% die für die momentanen Umgebungsbedingungen und die momentane Drehzahl des Verdichters dem Kennfeld entnehmbare maximale Temperaturschwankung nicht übertrifft.

3.   Verfahren nach Anspruch 1 oder 2,
**dadurch gekennzeichnet,**
**dass** eine Temperatur und relative Feuchte der Umgebung als Umgebungsbedingungen während des Betriebes des Verdichters ständig erfasst werden und die Verdunstungskühlung bei Erreichen von Umgebungsbedingungen, bei denen die Verdunstungskühlung nicht betrieben wird, abgeschaltet wird.

4.   Verfahren nach einem der Ansprüche 1 bis 3,
**dadurch gekennzeichnet,**
**dass** ein Druck eines für die Verdunstungskühlung zugeführten Verdunstungsmediums während des Betriebs des Verdichters ständig gemessen und bei einer Überschreitung oder Unterschreitung vorgegebener Grenzwerte die Verdunstungskühlung abgeschaltet wird.

5.   Verfahren nach einem der Ansprüche 1 bis 4,
**dadurch gekennzeichnet,**
**dass** ein Massenfluss eines für die

Verdunstungskühlung zugeführten Verdunstungsmediums ständig gemessen und bei einer Abweichung von mehr als 5% von einem vorgegebenen Sollwert die Verdunstungskühlung abgeschaltet wird.

6. Verfahren nach einem der Ansprüche 1 bis 5, **dadurch gekennzeichnet,** **dass** die Verdunstungskühlung durch geeignete Anordnung von Einspritzdüsen für ein Verdunstungsmedium innerhalb eines Querschnittes eines Luftansaugstutzens des Verdichters so betrieben wird, dass ein über dem Querschnitt gleichmäßig gesättigter Fluss der angesaugten Verdichterluft erreicht wird.

## Claims

1. Method for operation of a compressor of a gas turbine, in which compressor air inducted from the environment is cooled by means of evaporative cooling before entry into the compressor, wherein, before putting the compressor into service, maximum possible temperature drops by evaporative cooling are determined in dependence upon different environmental conditions, and/or made available as a data record, the temperature drops are related to a map of the compressor and from this can be gathered maximum temperature fluctuations to be observed at different environmental conditions and different R.P.M.s of the compressor to avoid surging, **characterized in that** the evaporative cooling can only be operated when current environmental conditions produce a maximum possible temperature drop, of which a predetermined fractional part, which lies between 50% and 100%, does not exceed the maximum temperature fluctuation gatherable from the map for these environmental conditions and for the current R.P.M. of the compressor.

2. Method according to Claim 1, **characterized in that**, the evaporative cooling is only operated if the current environmental conditions produce a maximum possible temperature drop, of which a fractional part of 80% does not exceed the maximum temperature fluctuation gatherable from the map for the current environmental conditions and the current R.P.M. of the compressor.

3. Method according to Claim 1 or 2, **characterized in that**, a temperature and relative humidity of the environment as environmental conditions are continually measured during operation of the compressor, and the evaporative cooling is shut down upon reaching environmental conditions at which the evaporative cooling is not operated.

4. Method according to one of Claims 1 to 3, **characterized in that**, a pressure of an evaporative medium which is supplied for the evaporative cooling is continually measured during operation of the compressor, and the evaporative cooling is shut down in the event of an exceeding or falling below of predetermined limiting values.

5. Method according to one of Claims 1 to 4, **characterized in that**, a mass flow of an evaporative medium which is supplied for the evaporative cooling is continually measured, and the evaporative cooling is shut down in the event of a difference of more than 5% of a predetermined rated value.

6. Method according to one of the Claims 1 to 5, **characterized in that**, the evaporative cooling, by suitable arrangement of injection nozzles for an evaporative medium inside a cross section of an air induction pipe of the compressor, is operated so that an evenly saturated flow of the inducted compressor air can be achieved over the cross section.

## Revendications

1. Procédé pour faire fonctionner un compresseur d'une turbine à gaz, dans lequel de l'air de compresseur aspiré dans l'environnement est refroidi avant l'entrée dans le compresseur au moyen d'un refroidissement par évaporation, des chutes de température maximales possibles avant la mise en service du compresseur du fait du refroidissement par évaporation étant déterminées en fonction de différentes conditions environnementales et/ou étant fournies sous forme de jeu de données, les chutes de température étant mises en relation avec un champ caractéristique du compresseur et des variations de température maximales à respecter pouvant être prélevées de ce champ caractéristique pour éviter un pompage dans différentes conditions environnementales et pour un régime différent du compresseur, **caractérisé en ce que** le refroidissement par évaporation n'est mis en oeuvre que lorsque des conditions environnementales temporaires produisent une chute de température maximale possible, dont une fraction prédéterminée, qui est comprise entre 50 % et 100 %, ne dépasse pas la variation de température maximale pouvant être prélevée du champ caractéristique pour ces conditions environnementales et pour un régime temporaire du compresseur.

**2.** Procédé selon la revendication 1, **caractérisé en ce que** le refroidissement par évaporation n'est mis en oeuvre que lorsque les conditions environnementales temporaires produisent une chute de température maximale possible, dont une fraction de 80 % ne dépasse pas la variation de température maximale pouvant être prélevée du champ caractéristique pour ces conditions environnementales temporaires et pour le régime temporaire du compresseur.

**3.** Procédé selon la revendication 1 ou 2, **caractérisé en ce qu'**une température et une humidité relative de l'environnement sont détectées en permanence sous forme de conditions environnementales pendant le fonctionnement du compresseur et le refroidissement par évaporation est coupé une fois que l'on a obtenu les conditions environnementales lors desquelles le refroidissement par évaporation n'est pas mis en oeuvre.

**4.** Procédé selon l'une quelconque des revendications 1 à 3, **caractérisé en ce qu'**une pression d'un milieu d'évaporation acheminé pour le refroidissement par évaporation pendant le fonctionnement du compresseur est mesurée en permanence et si une valeur limite prédéfinie n'est pas atteinte ou est dépassée, le refroidissement par évaporation est coupé.

**5.** Procédé selon l'une quelconque des revendications 1 à 4, **caractérisé en ce qu'**un débit massique d'un milieu d'évaporation acheminé pour le refroidissement par évaporation est mesuré en permanence et en cas d'écart de plus de 5 % d'une valeur de consigne prédéterminée, le refroidissement par évaporation est coupé.

**6.** Procédé selon l'une quelconque des revendications 1 à 5, **caractérisé en ce que** le refroidissement par évaporation est mis en oeuvre par un agencement approprié de buses d'injection pour un milieu d'évaporation à l'intérieur d'une section transversale d'une tubulure d'aspiration d'air du compresseur, de telle sorte qu'un flux d'air de compresseur aspiré, saturé et uniforme sur toute la section transversale, soit obtenu.

FIG 1

$n^* = 1.0$

0.99

0.96

1

3

2

$n^* = 0.92$

5

0.91

0.905

5    4

20°C Temperaturschwankung

1% Verschmutzung

4

1% Verschmutzung

4°C Temperaturschwankung

Fluss

# FIG 2

Legend:
- ─■─ Nmech=94%
- ─△─ Nmech=95%
- ─×─ Nmech=96%
- ─*─ Nmech=97%
- ─●─ Nmech=98%
- ─+─ Nmech=99%
- ─▲─ Nmech=100%

# FIG 3

## FIG 4

Temperaturabsenkung durch Verdunstungs-Kühlung [°C]

Temperaturschwankung [°C]

- ◆ Daten
- ············ 100%
- —·— 80%
- —··— 50%

## FIG 5

Vereisungsgrenze

Relative Feuchte der Umgebung [%]

Umgebungstemperatur [°C]

Max. mögliche Temperaturschwankung
Umgebungstemp.-Feuchtkugeltemp. d. Umgebung
$\Delta T_{max}$ [°C]

95%
96%
97%
98%
99%
100% Nmech

FIG 6

**EP 1 759 103 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0889212 A